Europäisches Patentamt

European Patent Office

Office européen des brevets

(19)

(11) Publication number: **0 135 100**
**A2**

## (12) EUROPEAN PATENT APPLICATION

(21) Application number: **84109280.2**

(22) Date of filing: **04.08.84**

(51) Int. Cl.⁴: **B 65 B 3/32**
**G 01 F 11/04**

(30) Priority: **23.08.83 IT 2261583**

(43) Date of publication of application:
**27.03.85 Bulletin 85/13**

(84) Designated Contracting States:
**AT BE CH DE FR GB LI NL SE**

(71) Applicant: **TECNOPROGETTI S.r.l.**
**Via Labriola, 28**
**I-41100 Modena(IT)**

(72) Inventor: **Muzzarelli, Gabriele**
**Via Marzabotto, 116**
**I-41100 Modena(IT)**

(74) Representative: **Luksch, Giorgio, Dr.-Ing. et al,**
**Ing. A. Giambrocono & C. S.r.l. Via Rosolino Pilo, 19/b**
**I-20129 Milano(IT)**

(54) **A device for transferring metered and formed amounts of pasty product.**

(57) The pasty product which, for example, may be cheese, minced meat, mixture for salted meats and mortadellas, is forcibly introduced into metering chambers provided with movable wall; the chambers are then rotated and during such a rotation the supply of product to the chambers is shut off; the chambers are then emptied by displacing the movable walls under the direct or indirect action of pressure fluid, such as compressed air.

Fig. 1

0135100

"A DEVICE FOR TRANSFERRING METERED AND FORMED AMOUNTS OF

PASTY PRODUCT"

This invention relates to a device for transferring metered and formed amounts of pasty product from a feed location to an unloading or discharge location. The pasty product may be of any kind, but preferably is a food product such as, for example, cheese, minced meat, mixtures for salted meats, mortadellas (Bologna sausages) and the like.

Particularly but not exclusively referring to the field of cheeses of so-called spun paste type, it is known that some production lines subsequently include a spinning machine for imparting a fibrous structure to the curdle, in case a salting machine, a forming machine dividing the spun paste into pieces of a given shape and weight, which are manually introduced into containers of an automatic packaging or wrapping up machine closing under vacuum or neutral gas atmosphere the container having the piece of cheese therein.

The forming machine comprises a horizontal snap rotating pan, provided with a series of cylinders of adjustable capacity, arranged along the head periphery and which, due to the head rotation, are loaded with cheese at a feed station and are unloaded at an outlet station.

For a higher productivity, the automatic packaging machines provide transverse rows (to the advance direction) formed of a plurality of containers. Owing to the relatively substantial dimensions thereof, said forming machine is unsuitable for direct coupling with the packaging machine. As a result, it is therefore impossible to provide that the pieces being uloaded from the forming machine can directly arrive at the containers of the packaging machine. Therefrom, the need arises for manual loading thereof in such containers, which originates the following disadvantages: serious risk of cheese contamination, low productivity and high costs for workmen.

Other production lines provide that the pieces from the forming machine are loaded in dies of relatively significant dimensions, such as those of "provolone" and the like, snap advancing under the outlet mouth of the forming machine. These dies are transferred to the compacting lines. The cheese is then moved in a brine bath. The forming machines used in these lines are of the type as above indicated and therefore are of considerable overall size and weight, which makes difficult and complex such operations as assembling, disassembling and cleaning at the end of work.

Therefore, it is the primary object of the present invention to provide a device for transferring metered and formed amounts of a pasty product from a feed location to an unloading location, which is of relatively reduced overall size; combinable with a packaging machine and synchronizable therewith for direct loading thereof and accordingly avoiding any contaminating manual interventions; easy to be assembled, disassembled and cleaned; and of simple construction and reliable operation.

It is another object of the present invention to enable in combination with a conventional automatic packaging machine a hot packaging of the food pasty products, such as cheeses, which packaging, because of being hot made even at relatively high temperatures (in case of cheese up to 60-70°C, is such that the product is free of thermolable micro-

0135100

organisms and therefore has a use "lifetime" much ligher than the actual one which at present is of only few days owing to the constant presence of contaminations by thermolable micro-organisms, such as choliform bacilli, aureus bacillus, salmonella, vibro, brucella and so on.

These objects, in addition to further objects which will become more apparent from the following detailed description, are achieved by a device which is essentially characterized in that for transferring a metered amount of a pasty product from a feed location to an unloading location, at least one chamber is provided, rockingly mounted and operated to move from one to the other of said locations, provided with movable wall controllable to eject the metered amount of pasty product from the chamber at the unloading location, and associated with shut off means of the feed location when such a chamber moves to such an unloading location.

The invention will be better understood from the following detailed description, given be mere way of unrestrictive example, of a preferred embodiment thereof shown in the accompanying drawings, in which:

Fig. 1 is a fragmentary perspective view showing a known vacuum wrapping up or packaging machine with associated the device according to the invention which, in this example, is of the type having three metering chambers;

Fig. 2 is a view schematically showing the device of the invention in a longitudinal vertical section through the axis of one of the metering chambers;

Fig. 3 is a partly sectional plan view through a horizontal plane of the inventive device with two metering chambers;

Fig. 4 is partly side and partly sectional view of the device according to the invention with the omission of the metering chamber and other parts for a clearer rappresentation;

Fig. 5 is a vertical sectional view showing the device when the relative metering chambers are filled with product;

Fig. 6 is a view similar to that of Fig. 5, but with metering chambers at unloading position; and

Fig. 7 is a view similar to that of Fig. 5, but with emptied metering chambers.

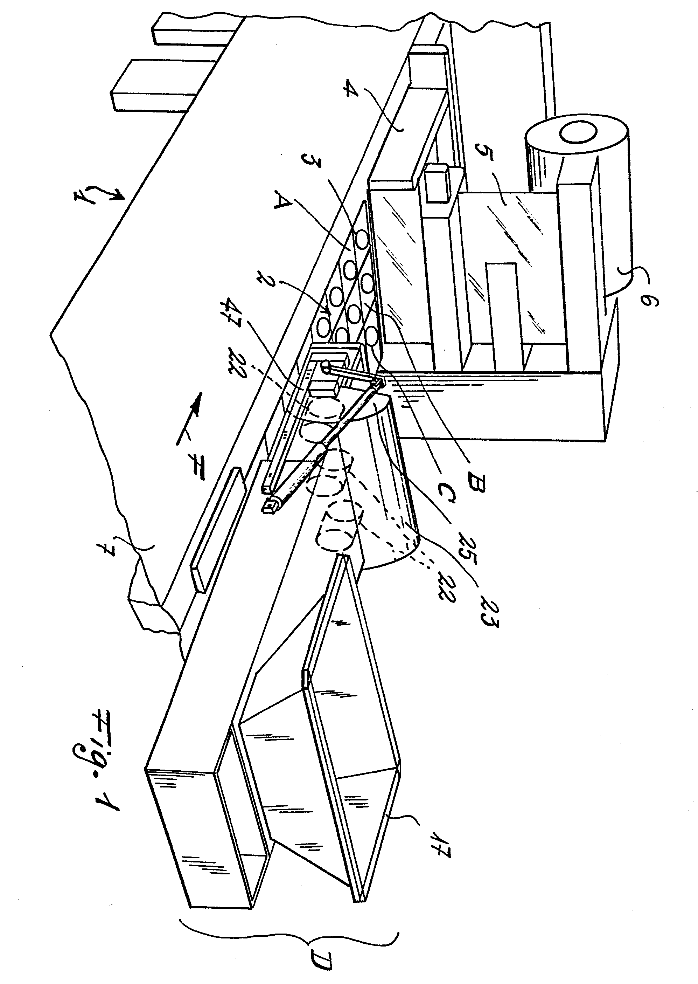

Referring to the figures of the accompanying drawings, reference numeral 1 denotes as a whole a conventional wrapping up or packaging machine operating under vacuum or in a protective gas atmosphere of any products, but particularly food products. From a web of thermoformable plastic material and operating under vacuum and heat, this machine provides a continuous web 2 of tanks 3 connected to one another and arranged on two or more longitudinal rows (in Fig. 1, three rows A, B and C). In these known machines, the product is introduced in said tanks 3 and then the filled tanks, snap advancing in the direction of arrow F, arrive at under a head 4 where such tanks are closed under vacuum or in inert atmosphere by heat sealing of a web of plastic material 5 from a reel 6. At the outlet of said head 4 or even in the latter, cutting operations are effected for separating said tanks now closed from one another.

For mechanically filling up said tanks 3, without any manual intervention, with a pasty product, such as still hot cheese, for example from an ordinary spinning machine, an apparatus is used, such as indicated as a whole at D, which is secured in any known manner on the shoulders 7 of the wrapping up machine 1, above the web 2 of tanks 3, ahead of the head 4 of such a machine.

0135100

The apparatus D comprises a framework carrying a conventional electric reducing motor 8, of which the outlet shaft 9 operates a wheelwork 10 supported at 10A, B and is coupled through a clutch 12 with an Archimedian or endless screw 11, cantilever rotatably carried in a bearing 13 mounted in a wall 14 of said apparatus framework.

In order to drive a second Archimedian screw 15, parallel to the former and also cantilever rotatably carried by the wall 14, a wheelwork 16 is provided meshing with the former 10 and also supported by the apparatus framework.

The apparatus D comprises a loading hopper 17, whereby the pasty but sliding product, such as hot spun cheese, denoted at 18, is caused to flow to a chamber 19, which is provided in the structure of the apparatus having said Archimedian screws 11, 15 operating therein, rotating in opposite directions and causing the product to advance in the direction of arrow G to an extruding die, preferably of plastic material 20 slidably mounted in said chamber 19 and the contour of which obviously corresponds to that of said chamber, sealing therewith either by direct contact or by peripheral gaskets 21.

It should be noted that the apparatus D of Fig. 1 has three Archimedian screws and one die with three outlet mouths 22 for supplying the three rows A, B and C of tanks 3, while in the remaining figures for sake of simplicity said apparatus is shown with only two Archimedian screws and its die 20 with two outlet mouths 22. However, it is understood that the outlet mouths and Archimedian screws may be in any number depending on requirements.

The outlet mouths 22 are convergent and, under the thrust exerted by the product 18 on die 20 and caused by rotation of Archimedian screws 11, 15, said die is applied or urged against a shut off lug 23 of cylindrical sector, provided at two locations thereof with ports 24, the inlet contour of which substantially coincides with the outlet contour of mouths 22 of said die 20. The outer face of the die has a configuration conjugated to that of said shut off lug 23.

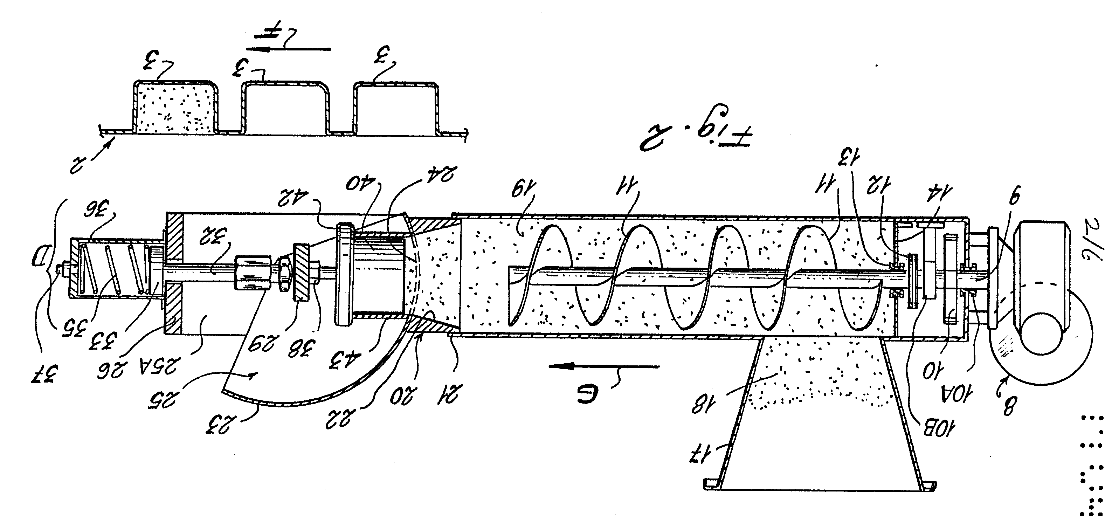

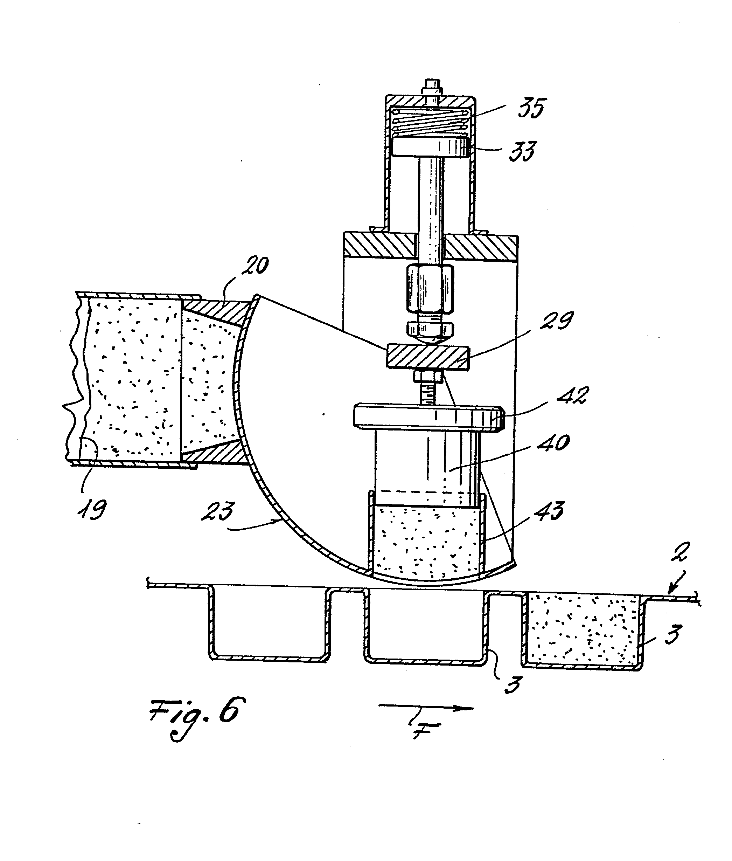

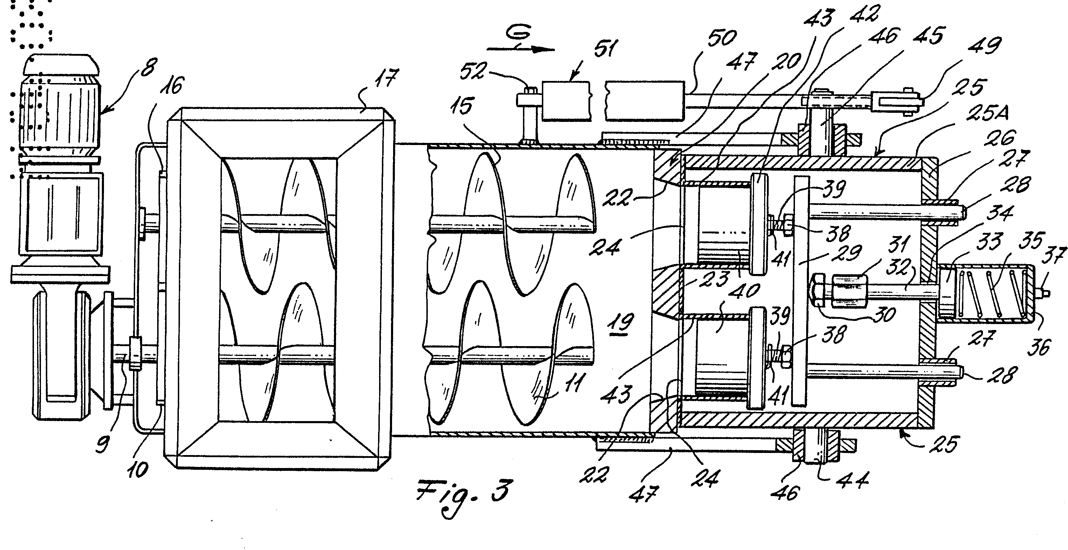

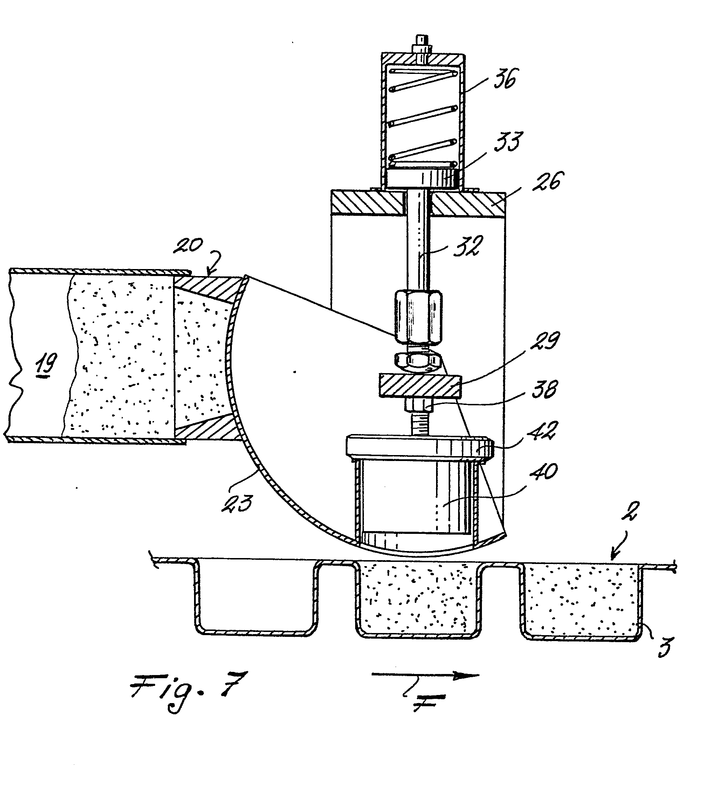

The lug ports 24 are in alignment with the die mouths 22 at a position of end of stroke (see for example Fig. 2) of said lug which, as better explained in the following, will gradually and then completely shut off said mouths 22 when rotated to the other position of end of stroke (see Figs. 6 and 7).

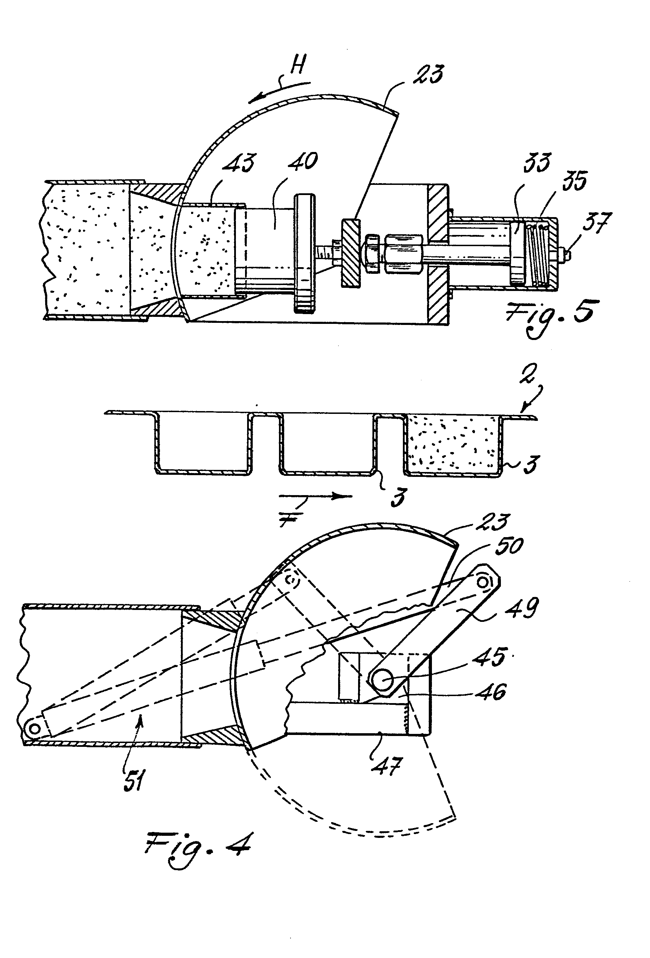

The shut off lug 23 is integral with two sides 25, partly shaped as a circular sector and partly as traight parallel sides 25A. The two side parts 25A are interconnected by a cross piece 26 which, particularly see Fig. 3, carries two bearings or supports 27 for axial guide of a pair of rods 28 integral with a thrust cross piece 29. An adjustable threaded heel or block member 30 bears against the latter and is screwed in a nut 31 carried by the stem 32 of a piston 33. This stem 32 is guided in an axial bearing or support 34 associated with said cross piece 26 and said piston is slidably pounted against a spring 35 in a cylinder 36 integral with such a cross piece 26 and head connectable at 37 to a supply of pressurized air through a three way valve, for example an electromagnetic valve, not shown.

Said thrust cross piece 29 has adhered thereto the heads 38 of two threaded pins 39, screwed down in threaded holes of metering pistons 40 and blockable at the desired position by lock nuts 41. These threaded pins perform the function of modifying the stroke or travel of the metering pistons 40 and accordingly the amount of product to be transferred by the device. Said pistons have a stop collar 42 and are slidably mounted in cylinders 43. These cylinders are integral with said shut off lug 23 at the ports 24 of the latter, being thereby a continuation thereof.

In order to give the required rotary movements to said lug 23 and to the above described members connected thereto, projecting pins 44, 45 are connected to said sides 25 as rotatably carried in bearings 46 connected to the framework of apparatus D by supporting and joining members 47.

Said pin 45 (particularly see Fig. 4) is integral with a crank 49, to the end of which the stem 50 is pivoted of a double acting jack 51, under compressed air control, the cylinder of which is pivoted at 52 to the apparatus framework.

The operation of the device is as follows.

Assume that the metering and forming cylinders 43 associated with lug 23 are at the position of Fig. 2, the web or conveyor belt 2 of tanks or containers 3 is moving in the direction of arrow F, the Archimedian screws are moving, the product 18 is filling up both said chamber 19 and hopper 17, and as a result said die 20 is applied against said lug 23.

Under these conditions the product is forcibly introduced into the metering and forming cylinders 43 displacing the pistons 42 as well as piston 33 against said spring 35. Of course, the connector 37 of cylinder 36 is connected with atmosphere through the above mentioned three way valve.

When said piston 33 has arrived at the end of stroke (see Fig. 5) and said metering and forming cylinders 43 are filled up with product to the amount allowed by settings made in the mechanical connection between the metering pistons 40 on one hand and piston 33 on the other hand, compressed air is supplied to said jack 51, for example by a presence contact acting on valve members, so as to cause the rotation of lug 23 and members connected thereto about said pins 44, 45.

At the same time the conveyor belt 2 of tanks or containers 3 will have come to a stop (to allow for closing of such tanks or containers as above described) and will not restart until the following operative steps are brought to completion.

The rotation of lug 23 causes the shut off of said mouths 22 of die 20 and (see Fig. 6) and terminates at the position rotated through 90°, at which the metering and forming cylinders 43 are vertically aligned with the first row of empty tanks or containers. Because of its pasty state, the product in the metering cylinders does not exit therefrom during this movement which occurs in a short time and upon movement completion it would take too long a time to emerge and move in the underlying containers 3 under the action of force of gravity and spring 35. Then, for unloading, the operation is caused of an end of stroke contact acting on said three way valve connecting cylinder 36 with a supply of compressed air. The piston 33 is then downward urged (Fig. 7° causing the product to be unloaded in the underlying containers. When piston 33 arrives at the position of Fig. 7, another end of stroke is operated for allowing the advance of conveyor 2 of containers 3 and causing the apparatus to move back from the position of Fig. 7 to that of Fig. 2.

- 9 -

0135100

Claims:

1. A device for transferring metered and formed amounts of pasty product, such as cheese, from a feed location to an unloading location, characterized by providing at least one metering chamber rockingly mounted and operated to move from one to the other of said locations, provided with movable wall controllable to eject at the unloading location the metered and formed amount of pasty product supplied to the chamber at the feed location, and associated with shut off means for said last mentioned location when said chamber moves to the unloading location.

2. A device as claimed in Claim 1, characterized in that said shut off means comprise a wall of a substantially cylindrical surface.

3. A device as claimed in Claim 1, characterized in that said metering chamber comprises a wall of any contour, is open at at least one end and has said movable wall mounted therein.

4. A device as claimed in Claims 1 and 3, characterized in that said wall is movable against a spring and associated with means for adjusting the amount of the displacement thereof to modify the amount of product supplied to the chamber.

5. A device as claimed in Claims 1 and 4, characterized in that said adjusting means for the displacement of the movable wall comprise screw means interposed in the connection between said wall and means controlling the ejection movement thereof.

6. A device as claimed in Claim 5, characterized in that said means controlling the ejection movement comprise at least one pressure fluid jack, preferably of simple acting type, and incorporating a return spring acting against the displacement of the movable wall in the direction of increase in volume of the metering chamber.

7. A device as claimed in any of the preceding claims, characterized in that said chamber with movable wall, said shut off means of the supply, said connecting and adjusting means, and said jack are part of a unit mounted to rotate through a predetermined angle about an axis by intervention of operating means.

8. A device as claimed in any of the preceding claims, characterized in that the feed location comprises means for pressure supply of the pasty product to the metering chamber through a movable die adhering to the wall of the shut off means.

0135100

Fig. 1

0135100

Fig. 2

M 04·02·84
0135100

*H*

*23*

*43* *40* *33* *35* *37*

*Fig. 5*

*2*

*3*

*3*

*23*

*50*

*49*

*45*

*46*

*47*

*51*

*Fig. 4*

Fig. 6

Fig. 3

5/6

0135100

*Fig. 7*